# EUROPÄISCHE PATENTSCHRIFT

(11) **EP 2 265 868 B1**
(45) Veröffentlichungstag und Bekanntmachung des Hinweises auf die Patenterteilung: **04.11.2015**
(21) Anmeldenummer: 09734217.4
(22) Anmeldetag: 07.04.2009
(51) Int. Cl.: B01D 25/00, F24C 15/20

(54) **FILTEREINHEIT FÜR EINE DUNSTABZUGSVORRICHTUNG UND DUNSTABZUGSVORRICHTUNG**
FILTER UNIT FOR A VAPOR REMOVAL APPARATUS AND VAPOR REMOVAL APPARATUS
ENSEMBLE DE FILTRATION POUR DISPOSITIF D'ASPIRATION DE FUMÉES ET DISPOSITIF D'ASPIRATION DE FUMÉES

(30) Priorität: 22.04.2008 DE 102008020149
(43) Veröffentlichungstag der Anmeldung: 29.12.2010
(73) Patentinhaber: BSH Hausgeräte GmbH, 81739 München (DE)
(72) Erfinder: ABELE, Dominik, 76351 Linkenheim (DE); MEISEL, Ingo, 79761 Waldshut-Tiengen (DE); NEUMANN, Ulmar, 76694 Forst (DE); ROHRBACH, Peter, 75203 Königsbach-Stein (DE); WILDE, Thomas, 76297 Stutensee (DE)
(86) Internationale Anmeldenummer: PCT/EP2009/054151
(87) Internationale Veröffentlichungsnummer: WO 2009/130127

(56) Entgegenhaltungen:
- EP-A- 0 238 780
- WO-A-03/072222
- DE-A1- 10 012 889
- DE-A1-102004 049 979
- DE-A1-102005 019 830
- DE-A1-102006 005 807
- FR-A1- 2 279 485

## Beschreibung

Die Erfindung eine betrifft eine Filtereinheit für eine Dunstabzugsvorrichtung sowie eine Dunstabzugsvorrichtung.

Bei Dunstabzugsvorrichtungen, insbesondere Dunstabzugshauben, ist es bekannt die Absaugöffnung der Dunstabzugshaube mit einer Prallplatte weitestgehende abzudecken. Hierbei erfolgt das Einsaugen von verunreinigter Luft in die Dunstabzugsvorrichtung über einen an dem Rand der Prallplatte gebildeten Spalt zwischen Prallplatte und Dunstabzugshaube, insbesondere Dunstabzugsgehäuse. Nach dem Durchtreten der verunreinigten Luft oder des Wrasens durch den Spalt gelangt dieser zu einem hinter der Prallplatte, beispielsweise in oder hinter der Absaugöffnung, angebrachten Fettfilter, an dem Verunreinigungen aus den Dünsten und Wrasen entfernt werden.

Diese Ausgestaltung der Dunstabzugshauben weist den Nachteil auf, dass ein Teil der Wasenrückstände undefiniert auf anderen Geräteoberflächen als dem Fettfilter abgeschieden wird.

Weiterhin ist aus der DE 10 2005 019 830 A1 eine Filteranordnung für Haushaltsdunstabzugshauben beschrieben, bei der eine Wirbelabscheidereinheit auf dem Rand eines Bodenblechs angeordnet ist. Die Zuleitung des Wrasens, der die Filteranordnung anströmt zu der Wirbelabscheidereinheit erfolgt hierbei aufgrund eines die Filteranordnung umgebenden Wrasenschirm und den Unterdruck in der Dunstabzugshaube.

In der EP 0 238 780 A1 ist eine weitere Filteranordnung für eine Dunstabzugshaube beschrieben. Diese Filteranordnung besteht aus einem Bodenblech und einem Deckblech. Zwischen den Blechen sind Luftablenkvorrichtungen angeordnet, die sich von dem Bodenblech aus senkrecht erstrecken. In dem Bodenblech sind im Randbereich Öffnungen vorgesehen, durch die Luft zu den Luftablenkvorrichtung strömt.

In der FR 74 25876 A1 ist eine Dunstabzugshaube beschrieben, bei der unter der Ansaugöffnung ein Sammelbehälter vorgesehen ist. Im oberen Bereich des Sammelbehälters sind Lüftungsschlitze vorgesehene. Auf der Höhe der Lüftungsschlitze sind zudem im Inneren des Sammelbehälters Filter vorgesehen. Der Bereich, in dem die Lüftungsschlitze eingebracht sind, schließt sich unmittelbar an den Boden des Sammelbehälters an und ist von dem Boden aus nach außen geneigt angeordnet.

In der DE 100 12 889 A1 eine Dunstabzugshaube beschrieben, bei der in der Unterseite einer Sichthaube am Rand Ansaugflächen vorgesehen sind. Diese Ansaugflächen werden durch Schlitze in der Unterseite der Sichthaube gebildet.

Nächstliegenden Stand des Technik ist in dem Dokument FR 2279485 A1 offenbart.

Aufgabe der vorliegenden Erfindung ist es somit eine Lösung zu schaffen, die den Fettabscheidegrad einer Dunstabzugsvorrichtung mit einer Prallplatte verbessert.

Der Erfindung liegt die Erkenntnis zugrunde, dass die Geräteoberflächen, an denen sich Wrasenrückstände abscheiden können zu einer Filtereinheit zusammengefasst und optimiert zueinander angeordnet sind.

Gemäß einem ersten Aspekt wird die Aufgabe daher durch eine Filtereinheit mit einem Filterelement für eine Dunstabzugsvorrichtung gelöst, wobei die Filtereinheit ein Wrasenleitblech, das das Filterelement zumindest teilweise hält und das einen Prallbereich aufweist, sowie einen den Prallbereich des Wrasenleitbleches zumindest teilweise umgebenden Randabsaugbereich aufweist. Die Filtereinheit ist dadurch gekennzeichnet, dass der Prallbereich der Filtereinheit luftundurchlässig ist, der Randabsaugbereich den einzigen Bereich darstellt, über den Wrasen und Dünste in die Dunstabzugsvorrichtung gelangen können, der Randabsaugbereich zumindest teilweise durch einen Teil des Wrasenleitbleches gebildet wird, der Randabsaugbereich zu dem Prallbereich abgewinkelt ist und zwischen dem Prallbereich des Wrasenleitblechs und dem Randabsaugbereich ein Übergangsbereich vorgesehen ist, der entgegengesetzt zu der Ausrichtung des Randabsaugbereiches ausgerichtet ist.

Der Prallbereich entspricht von seiner Wirkung den aus dem Stand der Technik bekannten Prallplatten. Insbesondere wird in diesem Bereich der Wrasen gezielt zu Randbereichen geleitet. Indem gemäß der vorliegenden Erfindung das Wrasenleitblech einen Teil der Filtereinheit darstellt, kann dieses zum einen zusammen mit den weiteren Teilen der Filtereinheit aus der Dunstabzugsvorrichtung entnommen werden. Zum anderen kann das Wrasenleitblech zusätzliche Funktionen zu dem reinen Leiten von Wrasen zu einem Randbereich, erfüllen. Insbesondere dient das Wrasenleitblech zum Halten eines Filterelementes der Filtereinheit. Das Filterelement wird im Folgenden auch als Fettfilter bezeichnet. Zudem können zumindest Teilbereiche des Wrasenleitbleches zur Leitung oder zum Sammeln von abgeschiedenen Wrasenrückständen, wie Fett und weiteren Verunreinigungen, verwendet werden.

Als Randabsaugbereich wird der Bereich der Filtereinheit bezeichnet, der im Randbereich der Filtereinheit liegt. Dieser Bereich ist zumindest teilweise luftdurchlässig und weist vorzugsweise zumindest bereichsweise Filtermaterial auf. Da der Prallbereich der Filtereinheit luftundurchlässig ist, stellt der Randabsaugbereich den einzigen Bereich dar, über den Wrasen und Dünste in die Dunstabzugsvorrichtung gelangen können.

Neben dem Leiten von Wrasen zu dem Randabsaugbereich dient das Wrasenleitblech auch zur Verbesserung des optischen Erscheinungsbildes der Dunstabzugsvorrichtung. Während bei Dunstabzugsvorrichtungen ohne Wrasenleitblech Filterelemente, wie beispielsweise Streckgittermetalle, für den Benutzer unmittelbar sichtbar sind, kann bei der erfindungsgemäßen Dunstabzugsvorrichtung ein im Wesentlichen einheitliches Erscheinungsbild erzeugt werden.

Besonders bevorzugt liegt der Randabsaugbereich in Hauptanströmrichtung der Dunstabzugsvorrichtung in oder hinter einem Randspalt beziehungsweise Eintrittsspalt. Hierdurch ist der Randabsaugbereich so angeordnet, dass Wrasen, der die Filtereinheit von unten anströmt, zu dem Filtermaterial gelangen kann, ohne eine Richtungsänderung durchführen zu müssen. Dies weist den Vorteil auf, dass Partikel und andere Verunreinigungen, die in den aufsteigenden Dünsten oder Wrasen enthalten sind, sich nicht aufgrund einer abrupten Umlenkung des Wrasenstroms auf Geräteoberflächen abscheiden, die aus der Dunstabzugsvorrichtung nicht entnommen werden können. Solche Geräteoberflächen sind nicht oder nur schwer zu reinigen. Zudem werden die auf diesen Oberflächen abgeschiedene Wrasenrückstände nicht zur Bestimmung des Fettabscheidegrades einer Dunstabzugsvorrichtung einbezogen. Bei der vorliegenden Erfindung wird eine solche Richtungsänderung des Wrasenstroms vor dem Erreichen eines Filtermaterials verhindert und so der Fettabscheidungsgrad der Dunstabzugsvorrichtung insgesamt verbessert.

Gemäß einer Ausführungsform wird der Randabsaugbereich zumindest teilweise durch einen Teil des Filterelementes, insbesondere dessen Rand gebildet. Der Randabsaugbereich deckt vorzugsweise einen zwischen dem Prallbereich des Wrasenleitbleches und einer Gehäuseöffnung, in der die Filtereinheit eingesetzt wird, bestehenden Spalt, vollständig ab.

Der Randabsaugbereich kann hierbei ausschließlich aus dem Fettfilter bestehen. In dieser Ausführungsform ist die Größe des Wrasenleitblechs geringer als die Fläche, die durch das Filterelement beschrieben beziehungsweise definiert wird. Das Filterelement ragt dabei über den Rand des Wrasenleitbleches hinaus und bildet den Randabsaugbereich der Filtereinheit. Das Wrasenleitblech hingegen stellt bei dieser Ausführungsform ausschließlich den Prallbereich der Filtereinheit dar. Der Vorteil dieser Ausführungsform besteht in dem einfachen Aufbau der Filtereinheit. Diese kann durch ein einfaches Auflegen beziehungsweise Einlegen eines flächigen Filterelementes auf beziehungsweise in das Wrasenleitblech hergestellt werden. Alternativ kann auch ein Streifen eines Filtermaterials, der als Filterelement dient, entlang dem Rand des Wrasenleitblechs an diesem befestigt sein.

Erfindungsgemäß wird der Randabsaugbereich zumindest teilweise durch einen Teil des Wrasenleitbleches gebildet. Vorzugsweise umfasst bei dieser Ausführungsform der Randabsaugbereich sowohl einen Teil des Filterelementes als auch einen Teil des Wrasenleitbleches. Das Filterelement ist hierbei hinter dem Wrasenleitblech angeordnet. Indem der Randabsaugbereich zumindest teilweise durch einen Teil des Wrasenleitblechs gebildet wird, kann der Filtereinheit eine verbesserte Stabilität verliehen werden. Die Filtereinheit ist daher mechanisch robust insbesondere gegen unsachgemäße Handhabung durch den Kunden. Zudem wird die Reinigung des Wrasens und der Dünste durch das Filterelement in dem Randabsaugbereich gewährleistet. Das Filterelement stellt bei dieser Ausführungsform vorzugsweise eine Fläche dar, die am Rand durch den Rand des Wrasenleitbleches gehalten wird. Das Filterelement, das beispielsweise aus Streckgitter bestehen kann, ist - wie es der Kunde von herkömmlichen Fettfiltern gewohnt ist - durch einen Rahmen eingefasst, was einen hochwertigen Eindruck vermittelt.

Gemäß einer bevorzugten Ausführungsform weist das Filterelement zumindest im Bereich des Randabsaugungsbereiches zumindest teilweise eine Beschichtung auf. Der Teil des Filterelementes, der in dem Randabsaugungsbereich liegt, wird bei der Benutzung der Dunstabzugsvorrichtung von ungereinigtem Wrasen angeströmt. Indem zumindest in diesem Bereich an dem Filterelement eine Beschichtung vorgesehen ist, wird es möglich diesen Bereich gegen festes Anhaften von Verunreinigungen zu schützen. Somit kann das Filterelement einfach gereinigt werden. Erfindungsgemäß ist es aber auch möglich nicht nur den Bereich, in dem das Filterelement in dem Randabsaugungsbereich liegt, sondern das gesamte Filterelement mit einer Beschichtung zu versehen. Hierbei kann der Arbeitsschritt der Beschichtung einfacher erfolgen. Allerdings weist die vollständige Beschichtung den Nachteil des höheren Materialbedarfs zur Beschichtung auf.

Die Beschichtung, die gemäß einer Ausführungsform der Erfindung vorgesehen sein kann, stellt vorzugsweise keine durchgehende Schicht oder Lage dar. Vielmehr kann die Beschichtung beispielsweise eine Beschichtung sein, die durch Pulverbeschichtung aufgebracht wird. Diese Art der Aufbringung weist den Vorteil auf, dass Öffnungen in dem Filterelement, die für die Reinigung des Wrasens notwendig sind, nicht durch die Beschichtung verschlossen werden. Es ist allerdings auch möglich andere Beschichtungsmaterialien, wie Lacke und dergleichen zu verwenden. Weiterhin wird im Sinne der vorliegenden Erfindung auch ein Einfärben als Beschichtung verstanden. Hierbei kann das Beschichtungsmaterial auch vollständig in dem Filtermaterial aufgenommen sein.

Gemäß einer bevorzugten Ausführungsform ist die Beschichtung zumindest an der Unterseite des Filterelementes vorgesehen. Diese Seite des Filterelementes wird durch den noch nicht gereinigten Wrasen als erstes angeströmt und ist damit den meisten Verunreinigungen ausgesetzt. Eine Beschichtung zumindest dieser Seite führt daher zu einer besseren Reinigbarkeit des Filterelementes. Weiterhin ist das Filterelement in der Filtereinheit so angeordnet, dass dieses durch aufsteigenden Wrasen erreicht werden kann. Entweder der Wrasen strömt das Filterelement direkt an oder erreicht das Filterelement nachdem dieser durch Öffnungen in dem Wrasenleitblech hindurchgetreten ist. In beiden Fällen ist die Unterseite des Filterelementes zumindest in dem Randabsaugbereich für den Nutzer sichtbar. Wird das Filterelement zumindest in diesem Bereich zumindest an der Unterseite mit einer farbigen Beschichtung versehen, kann das optische Erscheinungsbild der gesamten Dunstabzugsvorrichtung verbessert werden. Vorzugsweise wird eine dunkle und besonders bevorzugt eine schwarze Beschichtung verwendet. Insbesondere bei einer Ausführungsform, bei der das Filterelement hinter dem Wrasenleitblech angeordnet ist, ist bei dieser Farbwahl das Filterelement für den Benutzer nicht oder nur noch schwer zu erkennen. Dadurch wird das optische Erscheinungsbild der Dunstabzugsvorrichtung optimiert.

Bei einer Ausführungsform des Filterelementes, bei dem dieses aus Filtermaterial-Lagen, wie beispielsweise Streckmetall-Lagen oder Vlies-Lagen besteht, kann die Beschichtung, die vorzugsweise an dem Teil des Filterelementes vorgesehen ist, in dem dieses im Randabsaugbereich liegt, an der unteren Lage vorgesehen sein. Hierdurch vereinfacht sich zum einen die Herstellung des Filterelementes und zum anderen wird der Materialbedarf für die Beschichtung minimiert.

Bei der Ausführungsform, bei der in dem Randabsaugbereich das Wrasenleitblech vorliegt, weist das Wrasenleitblech in dessen Randbereich Öffnungen auf. Durch diese Öffnungen können aufsteigende Dünste zu dem hinter dem Wrasenleitblech befindlichen Filterelement gelangen. Sind die Öffnungen als Schlitze ausgestaltet, so bestehen zwischen den Öffnungen Stege in dem Randbereich. Diese Stege stabilisieren hierbei die Filtereinheit insgesamt. Wird das Filterelement an dem Ende des Absaugbereiches von dem Wrasenleitblech gehalten, das dem Prallbereich abgewandt ist, so wird durch die Stege zusätzlich der Halt des Filterelementes an dem Wrasenleitblech verbessert.

Der Randabsaugbereich ist gemäß einer bevorzugten Ausführungsform gegenüber dem Prallbereich des Wrasenleitbleches nach oben versetzt. Als nach oben versetzt wird im Sinne der Erfindung ein Bereich verstanden, der gegenüber einer Ebene, in der der Prallbereich liegt, versetzt angeordnet ist. Insbesondere ist der Bereich gegenüber dieser Ebene zu der Seite versetzt, die der Anströmseite des Prallbereiches gegenüberliegt. Die Richtungsangabe nach oben wird in diesem Zusammenhang verwendet für eine Filtereinheit, die horizontal in einer Dunstabzugsvorrichtung eingebaut ist. Wird die Filtereinheit beispielsweise schräg an einer Dunstabzugsvorrichtung vorgesehen, so ist der Randabsaugbereich nach hinten versetzt. Durch den Versatz des Randabsaugbereiches zu dem Prallbereich wird die äußere Oberfläche der Filtereinheit, die für den Benutzer unmittelbar zugänglich oder sichtbar ist, ausschließlich durch den Prallbereich gebildet. Dieser weist in der Regel eine glatte Oberfläche auf, so dass der optische Eindruck der Filtereinheit verbessert ist im Vergleich zu einer Filtereinheit, bei der neben einem Prallbereich auch Teile des Filterelementes sichtbar sind. Zudem gewährt der Versatz des Randabsaugbereiches zu dem Prallbereich ein sicheres Zuleiten von Wrasen zu dem Randabsaugbereich der Filtereinheit. Im eingebauten Zustand wird in der Regel der Prallbereich in einer Ebene liegen, in der auch die Unterseite der Sichthaube der Dunstabzugsvorrichtung oder einer anderen Komponente der Dunstabzugsvorrichtung, in der die Filtereinheit eingesetzt wird, liegt. Hierdurch wird ein Randspalt zwischen der Sichthaube beziehungsweise der weiteren Komponente und dem Prallbereich gebildet. Dieser Randspalt leitet den von dem Prallbereich zugeleiten Wrasen zuverlässig zu dem Randabsaugbereich der Filtereinheit.

Erfindungsgemäß ist der Randabsaugbereich zu dem Prallbereich abgewinkelt. Indem zwischen der Ebene, in der sich der Prallbereich erstreckt, und der Fläche des Randabsaugbereiches ein Winkel vorliegt, der ungleich Null ist, kann bei einer geringen Randspaltbreite dennoch ein möglichst großer Randabsaugbereich bereit gestellt werden. Besonders bevorzugt liegt der Winkel, um den der Randabsaugbereich aus der Ebene des Prallbereiches abgewinkelt ist, zwischen größer Null und kleiner 90°.

Vorzugsweise stellt der Prallbereich eine Ebene dar. Diese ist luftundurchlässig ausgestaltet. Der Prallbereich kann aber auch eine Schalen- oder eine inverse Pyramidenstumpfform aufweisen. Hierdurch kann eine Leitung von Wrasen und Dünsten, die an diesem Bereich auftreffen zu dem Randabsaugbereich noch weiter verbessert werden.

Zwischen dem Prallbereich des Wrasenleitblechs und dem Randabsaugbereich ist erfindungsgemäß ein Übergangsbereich vorgesehen, der entgegengesetzt zu der Ausrichtung des Randabsaugbereiches ausgerichtet ist. Wird der Randabsaugbereich durch einen Teil des Wrasenleitblechs gebildet, so erhält der Rand des Wrasenleitbleches eine Z-förmige Konfiguration. Die Fläche, in der Öffnungen für den Einlass von Dünsten und Wrasen in die Dunstabzugsvorrichtung vorgesehen sein können, wird hierdurch wesentlich vergrößert. Die Bauhöhe der Filtereinheit hingegen bleibt trotz dieser großen Fläche gering.

Vorzugsweise ist der Übergangsbereich um einen Winkel von mehr als 90° zu der Ebene des Prallbereiches von diesem nach oben abgewinkelt. Hierdurch wird zusammen mit einem sich an den Übergangsbereich anschließender Randabsaugbereich, der gegenüber der Ebene des Prallbereiches um einen Winkel von weniger als 90° nach oben angewinkelt ist, eine Z-Konfiguration gebildet.

Ist ein Übergangsbereich vorgesehen, so sind in diesem Bereich vorzugsweise zumindest teilweise Öffnungen zum Durchlass von Wrasen vorgesehen. Hierdurch wird die Ansaugfläche, über die Wrasen durch zu dem Filterelement gelangen kann, vergrößert ohne, dass die Bauhöhe des Filterelementes vergrößert werden muss.

Die Öffnungen erstrecken sich vorzugsweise von dem Übergangsbereich bis in den Randabsaugbereich. Die Öffnungen können insbesondere Schlitze sein. Diese Ausführungsform weist den Vorteil auf, dass zum einen die Herstellung des Wrasenleitblechs vereinfacht wird, da die Öffnungen in dem eigentlichen Randabsaugbereich und dem Übergangsbereich in einem einzigen Herstellungsschritt mit einem einfachen Werkzeug eingebracht werden können. Zudem bietet die Form der Öffnungen von Schlitzen den Vorteil, dass zwischen diesen gerade Stege bestehen. Diese Stege dienen zum einen einer erhöhten Stabilität und zum anderen können entlang solcher Stege Wrasenrückstände oder andere flüssige Verunreinigungen, die aus dem Filterelement austreten, zu dem Prallbereich laufen und dort gesammelt werden.

In vertikaler Richtung besteht zwischen dem Prallbereich und dem Filterelement besteht vorzugsweise ein Abstand. Dieser wird bei der z-förmigen Konfiguration beispielsweise durch den Übergangsbereich und die Schräge erhalten. Dieser Abstand in dem ein Luftpolster zwischen Filterelement und Prallbereich besteht, dient als Isolationspolster. Dadurch werden Kondensationserscheinungen, die sonst an dem Prallbereich auftreten könnten, vermieden.

Gemäß einer Ausführungsform stellt die Filtereinheit eine vormontierbare Einheit dar. Als vormontierbare Filtereinheit wird eine Filtereinheit bezeichnet, bei der die einzelnen Komponenten aneinander befestigt beziehungsweise gehalten werden. Die Komponenten können daher vor der Abringung der Filtereinheit an der Dunstabzugsvorrichtung miteinander verbunden werden und die vormontierte Filtereinheit kann als ein Bauteil an der Dunstabzugsvorrichtung befestigt werden. Bei bekannten Dunstabzugsvorrichtungen müssen einzelne Komponenten, wie beispielsweise ein Filterelement und eine Prallplatte separat voneinander an der Dunstabzugsvorrichtung, insbesondere dem Gehäuse der Dunstabzugsvorrichtung befestigt werden. Daher ist das Anbringen der Komponenten gegenüber dem Anbringen einer vorgefertigten Filtereinheit wesentlich aufwendiger. Insbesondere bei Dunstabzugsvorrichtung, die eine horizontale Absaugöffnung aufweisen ist dieser aufwendigere Einbau besonders nachteilig, da die Montage über Kopf erfolgen muss.

Gemäß einem weiteren Aspekt betrifft die Erfindung eine Dunstabzugsvorrichtung zum Ansaugen und Reinigen von Dünsten und Wrasen. Die Dunstabzugsvorrichtung ist dadurch gekennzeichnet, dass diese eine erfindungsgemäße Filtereinheit aufweist.

Bevorzugt ist ein Randspalt in der Ebene eines Prallbereiches der Filtereinheit und einer die Filtereinheit umgebenden Sichthaube vorgesehen. Hierdurch wird das Erscheinungsbild verbessert, da unterschiedliche Ebenen an der Oberfläche vermieden werden. Der Spalt kann auch zwischen dem Prallbereich und einer vertikal dazu versetzten Sichthaube oder anderen Komponente der Dunstabzugsvorrichtung bestehen. Vorzugsweise ist der Spalt so groß gewählt, dass dieser einen Eingriff mit Fingern erlaubt. Die Spaltbreite kann daher beispielsweise zwischen 15mm und 25mm liegen. Das Wrasenleitblech mit dem darin eingesetzten lässt sich dadurch abklappen und aushängen, um gereinigt werden zu können.

Es ist aber auch möglich eine größere Spaltbreite zu wählen. Dies ist für das Absaugverhalten wie zum Beispiel die Filtersättigung und einen geringeren Luftwiderstand günstiger. Jedoch wird in diesem Fall das versteckte Streckmetallgitter (Metallfettfilter) deutlicher sichtbar. Bei dieser Ausführungsform wird vorzugsweise das Filterelement und insbesondere die sichtbare untere Seite des Filterelementes im Randabsaugbereich beschichtet beziehungsweise eingefärbt. Bei einer Spaltbreite, die weniger als beispielsweise 15mm beträgt, kann zum Herunterklappen und Abnehmen des Wrasenleitbleches kann ein zusätzlicher Griff verwendet werden.

Vorzugsweise ist bei der erfindungsgemäßen Dunstabzugsvorrichtung die Filtereinheit als Baueinheit an einem Gehäuse der Dunstabzugsvorrichtung montierbar und demontierbar. Indem die Filtereinheit als gesamte Baueinheit an der Dunstabzugsvorrichtung montiert und von dieser demontiert werden kann, ist der Montageaufwand gegenüber bekannten Dunstabzugsvorrichtungen verringert. Insbesondere ist bei dieser Ausführungsform der erfindungsgemäßen Dunstabzugsvorrichtung ein separates Anbringen eines Filterelementes und einer Prallplatte an der Dunstabzugsvorrichtung nicht erforderlich.

Mit der vorliegenden Erfindung kann man eine vergleichbar wirksame Luftfilterung erlangen, wie diese bei Essen die direkt über Streckgittermatten absaugen (also ohne Wrasenleitblech) erzielt werden kann. Ein Fettabscheidegrad von bis zu 90% ist mit der vorliegenden Erfindung möglich.

Die Erfindung wird im Folgenden erneut anhand der beiliegenden Figuren beschrieben. Es zeigen:
- Figur 1:: eine schematische perspektivische Ansicht einer Dunstabzugsvorrichtung mit erfindungsgemäßen Filtereinheiten;
- Figur 2:: eine schematische Schnittansicht eines Bereiches einer Sichthaube einer Dunstabzugsvorrichtung mit Filtereinheit gemäß dem Stand der Technik;
- Figur 3: eine schematische Schnittansicht eines Bereichs einer Sichthaube einer Dunstabzugsvorrichtung mit einer Ausführungsform einer Filtereinheit;
- Figur 4:: eine schematische Schnittansicht eines Bereichs einer Sichthaube einer Dunstabzugsvorrichtung mit einer weiteren Ausführungsform der erfindungsgemäßen Filtereinheit;
- Figur 5:: eine schematische, perspektivische Ansicht der Ausführungsform des Wrasenleitbleches der Ausführungsform der Filtereinheit nach Figur 4; und
- Figur 6: eine schematische Seitenansicht der Ausführungsform des Wrasenleitbleches der Ausführungsform der Filtereinheit nach Figur 4.

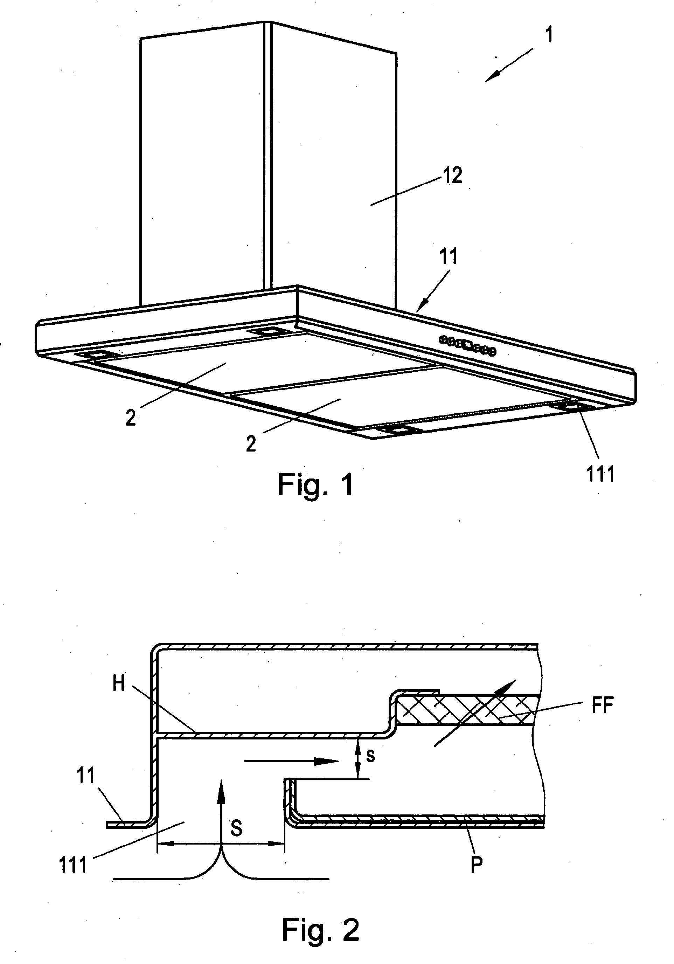

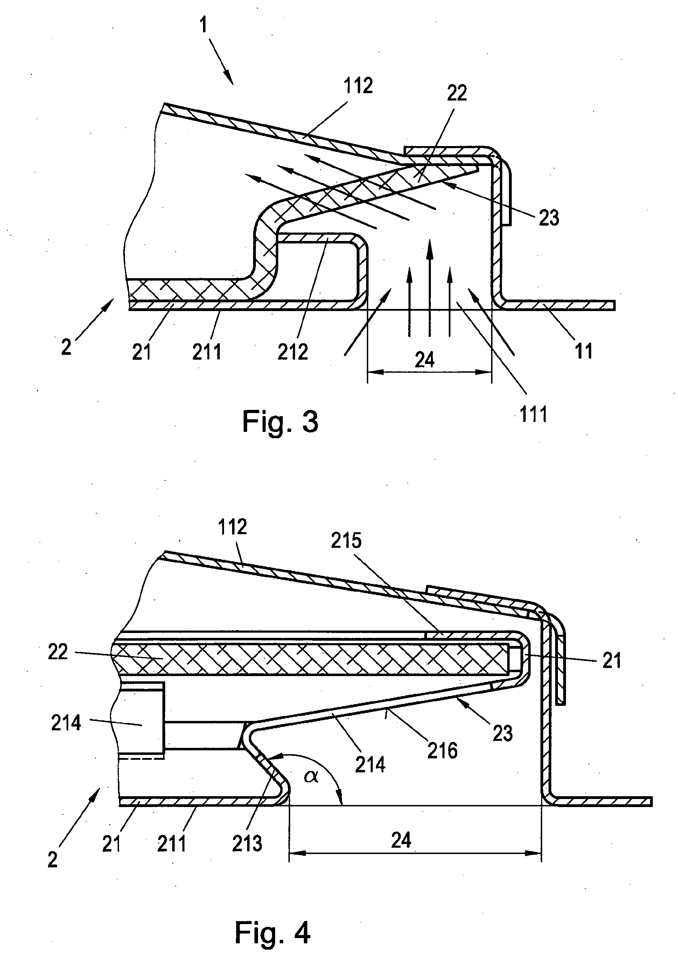

In Figur 1 ist eine perspektivische Ansicht einer Dunstabzugsvorrichtung 1 gezeigt, die eine Dunstabzugshaube in Form einer Esse darstellt. Die Dunstabzugsvorrichtung 1 besteht aus einer Sichthaube 11 und einem oberhalb der Sichthaube 11 angeordneten Kamin 12. In der Sichthaube 11 ist an der Unterseite eine Absaugöffnung 111 vorgesehen. Diese ist in der dargestellten Ausführungsform von zwei Filtereinheiten 2 abgedeckt. Der Aufbau der Filtereinheiten wird später unter Bezugnahme auf die Figuren 3 bis 6 genauer beschrieben.

In der Figur 2 ist aber zunächst ein Aufbau in einer Sichthaube 11 gemäß dem Stand der Technik gezeigt. In der Absaugöffnung 111 ist hierbei ein Fettfilter FF vorgesehen. Dieser wird von einem Halteblech H gehalten, das sich im Wesentlichen waagerecht erstreckt. Unterhalb des Fettfilters FF ist ein Prallblech P angeordnet. Dieses weist eine größere Größe auf, als der Fettfilter FF. Am Rand ist das Prallblech P, das im Wesentlichen eine ebene Platte darstellt nach oben abgebogen. Der abgewinkelte Teil steht hierbei unter einem Winkel von 90° zu der Fläche des Prallbleches P. Zwischen der Oberkante des abgewinkelten Teils des Prallblechs P und dem Halteblech H besteht ein Spalt s. Zudem besteht zwischen der äußeren Kante der Ebene des Prallblechs P und der Innenseite der Sichthaube 11 ein Spalt S in horizontaler Richtung. Wrasen der diesen Aufbau von unten anströmt, wird durch das Prallblech P in Richtung auf den Spalt S geleitet. Über den Spalt S gelangt der Wrasen zu dem Spalt s. Hierbei muss der Wrasenstrom eine Richtungsänderung von etwa 90° ausführen. Erst nach dem Durchtreten durch den Spalt s gelangt der Wrasen nach erneuter Richtungsänderung zu dem Fettfilter FF. Dieser Strömungsverlauf ist in Figur 2 schematisch durch Pfeile angedeutet. Aufgrund der abrupten Richtungsänderungen, die der mit Verunreinigungen beladene Wrasen ausführen muss, werden Verunreinigungen aus dem Wrasen abgeschieden und lagern sich beispielsweise an der Unterseite des Haltebleches H an.

In Figur 3 ist eine Filtereinheit 2 gezeigt. In der Figur 3 ist nur der Randbereich der Filtereinheit 2 in eingebautem Zustand gezeigt. Die Filtereinheit 2 ist in einer Sichthaube 11 in einer darin vorgesehenen Absaugöffnung 111 aufgenommen. Als Absaugöffnung 111 wird die Fläche an der Unterseite der Sichthaube 11 bezeichnet, die von aufsteigendem Wrasen zuerst angeströmt wird und über die der Wrasen teilweise in die Dunstabzugsvorrichtung 1 eintreten kann. Von der Absaugöffnung 111 zu einem Einlass in das Dunstabzugsgehäuse (nicht gezeigt), das in dem Kamin 12 vorgesehen ist, erstreckt sich ein Abschirmblech 112. Dieses verläuft vom unteren Rand der Absaugöffnung 111 zunächst vertikal nach oben und geht dann in ein unter einem geringen Winkel geneigtes Blech über.

Die Filtereinheit 2 besteht in der in Figur 3 gezeigten Ausführungsform aus einem Wrasenleitblech 21 und einem Filterelement 22. Das Wrasenleitblech 21 weist eine Wannenform auf. Hierbei sind die Ränder des Wrasenleitbleches 21 um 90° nach oben gebogen und die obere Kante des so abgewinkelten Randes ist so weit nach Innen gebogen, dass diese parallel zu der Fläche des Wrasenleitbleches 21 verläuft. Der so gebildete Flansch 212 besitzt eine geringe Breite. Die Fläche des Wrasenleitbleches 21 von der der Rand hochgebogen ist, dient als Prallbereich 211 und wird im Folgenden auch als solcher bezeichnet. Zwischen dem Prallbereich 211 und der inneren Kante der Sichthaube 11 besteht ein Randspalt 24, der beispielsweise 15mm breit sein kann.

In das so wannenförmig geformte Wrasenleitblech 21 ist ein Filterelement 22 eingelegt. Das Filterelement 22 kann beispielsweise einen Metallfettfilter darstellen. Dieser Metallfettfilter kann aus mehreren Lagen Streckmetall bestehen.

Das Filterelement 22 ragt an der Seite des Wrasenleitbleches 21 über dieses hinaus. Aufgrund des abgewinkelten Randes des Wrasenleitbleches 21 und des daran vorgesehenen Flansches 212 verläuft das Filterelement 22 in einem Abstand zu dem Rand des Prallbereiches 211 in dem Wrasenleitblech 21 nach oben und liegt an dem freien Ende des Flansches 212 an. Von dort ist der Rand des Filterelementes 22 leicht nach oben geneigt nach außen gerichtet. Der Rand des Filterelementes 22 liegt an dem Übergang des senkrechten Teils des Abschirmblechs 112 zu dem geneigten Teil des Abschirmbleches 112 an. Der Teil des Filterelementes 22, der zwischen dem Flansch 212 und dem Abschirmblech 112 liegt, bildet somit bei dieser Ausführungsform den Randabsaugbereich 23. In diesem Bereich kann eine Beschichtung an der Unterseite des Filterelementes 22, beispielsweise an der unteren Filterlage des Filterelementes vorgesehen sein. Die Beschichtung kann sich vom Rand des Filterelementes 22 aber auch weiter erstrecken und beispielsweise bis zu dem Teil des Filterelementes 22 reichen, der über den Flansch 212 hinaus nach unten zu dem Prallbereich 211 des Wrasenleitbleches 21 verläuft.

Durch diese Ausgestaltung des Filterelementes 22 und des Wrasenleitbleches 21 ist der Pfad, den Wrasen, der in den Randspalt 24 eintritt, durchlaufen muss, um zu dem Filterelement 22 zu gelangen, durch einen senkrechten Kanal gebildet. An der Oberseite des senkrechten Kanals trifft der Wrasen an der Seite, an der das Abschirmblech vorgesehen ist, unmittelbar auf das Filterelement 22 auf. An der Seite des Kanals, die dem Wrasenleitblech 21 zugewandt ist, verläuft der Wrasenpfad zu der Vertikalen leicht geneigt.

Ein Abscheiden von Verunreinigungen aus dem Wrasenstrom vor dem Auftreffen auf das Filterelement 22 kann bei dieser Ausführungsform daher vorteilhaft vermieden werden. Verunreinigungen, die sich gegebenenfalls auf dem Flansch 212 des Wrasenleitbleches 21 ablagern können, können auf einfache Weise beseitigt werden, da das Wrasenleitblech 21 zusammen mit dem Filterelement 22 aus der Dunstabzugsvorrichtung 1 entnommen werden kann.

In der Figur 4 ist eine Ausführungsform der erfindungsgemäßen Filtereinheit 2 gezeigt. Auch in dieser Figur 4 ist lediglich ein Randbereich einer in eine Dunstabzugsvorrichtung 1 eingebauten Filtereinheit 2 gezeigt. Der Aufbau der Sichthaube 11, in dem die Filtereinheit 2 aufgenommen ist, entspricht dem in der Figur 3 gezeigten und beschriebenen Aufbau. Die Filtereinheit 2 beisitzt allerdings einen etwas anderen Aufbau. Die Filtereinheit 2 besteht aus einem Filterelement 22 und einem Wrasenleitblech 21. Das Wrasenleitblech 21 weist bei dieser Ausführungsform eine größere Größe als das Filterelement 22 auf. Das Filterelement 22 ist vollständig in dem Wrasenleitblech 21 aufgenommen.

Das Wrasenleitblech 21 besitzt an der Unterseite der Filtereinheit 2 einen Prallbereich 211, der als ebene Fläche ausgestaltet ist. Am Rand des Prallbereiches 211 ist das Wrasenleitblech 21 nach oben gebogen. Hierdurch wird ein Übergangsbereich 213 geschaffen. Der Übergangsbereich ist zu der Fläche des Prallbereiches 211 um einen Winkel α von mehr als 90°, beispielsweise 135 ° geneigt. Dies kann durch Hochbiegen des Randes des Wrasenleitbleches 21 erzielt werden. An den Übergangsbereich 213 schließt sich der Randabsaugbereich 23 der Filtereinheit 2 an. In diesem Randabsaugbereich 23 liegt ein luftdurchlässiger Bereich des Wrasenleitbleches 21. Die Luftdurchlässigkeit ist bei der dargestellten Ausführungsform durch Schlitze 214 erzeugt, die sich in Richtung vom Rand des Wrasenleitbleches 21 zu dem Prallbereich 211 erstrecken. An den luftdurchlässigen Bereich schließt sich der Rand des Wrasenleitbleches 21 an. An dem oberen Rand des luftdurchlässigen Bereichs liegt zudem der Rand des Filterelementes 22 auf. Das Filterelement 22 ist in dieser Ausführungsform durch ein ebenes Filterelement 22 gebildet, das sich über die gesamte Breite und Tiefe des Wrasenleitbleches 21 erstreckt. Der Rand des Filterelementes 22 ist in den Rand des Wrasenleitbleches 21 eingefasst, indem ein Flansch 215 des Wrasenleitblechs 21 sich auf die Oberseite des Filterelementes 22 erstreckt. In dem Randabsaugbereich 23 ist das Filterelement 22 an der Unterseite mit einer dunklen Beschichtung versehen. Dadurch ist das Filterelement 22 durch die Schlitze 214 des Wrasenleitblechs 21 für den Benutzer nicht oder nur schwer zu erkennen.

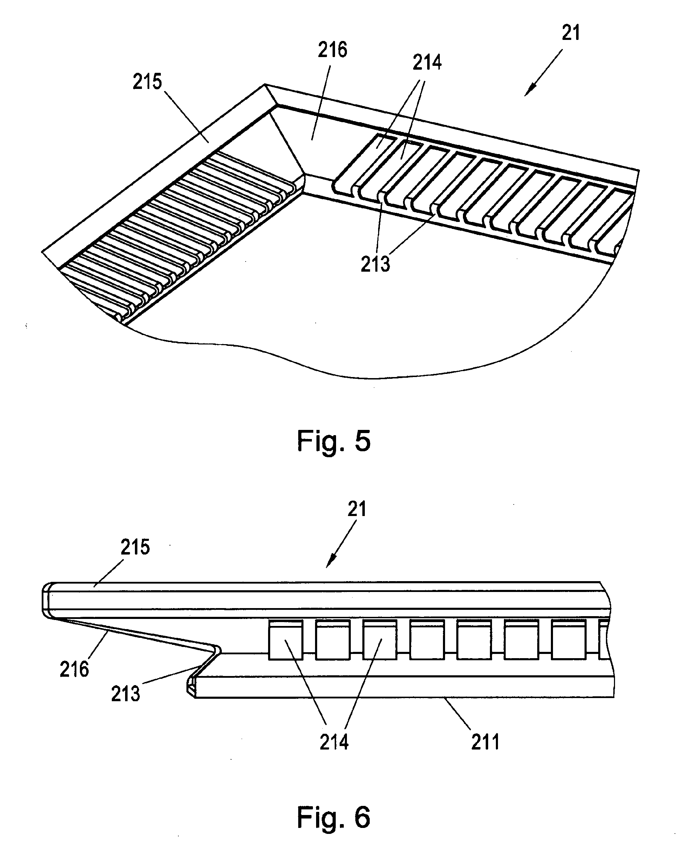

In der Draufsicht auf das Wrasenleitblech 21 der Filtereinheit, das in der Figur 5 ohne Filterelement gezeigt ist, ist zu erkennen, dass in dem luftdurchlässigen Bereich jeweils Schlitze 214 in das Wrasenleitblech 21 eingebracht sind. Die Schlitze 214 beginnen in Projektion des Flansches 215 auf die Schräge 216 an dem Ende des Flansches 215 und verlaufen über die gesamte Schräge 216. Wie sich aus Figur 5 entnehmen lässt, liegt das andere Ende der Schlitze 214 in dem Übergangsbereich 213. Hierdurch wird die Ansaugfläche gegenüber einem Wrasenleitblech, bei dem die Schlitze 214 nur in der Schräge 216 vorliegen vergrößert.

Zusätzlich zu der Vergrößerung der Ansaugfläche wird durch die in den Figuren 4 bis 6 gezeigte z-förmige Konfiguration die Bauhöhe der Filtereinheit 2 verringert. Hierdurch kann die gesamte Bauhöhe der Sichthaube 11 verringert werden, ohne, dass die Filtereinheit 2 über diese nach unten hinausragt, wodurch sich auch das optische Erscheinungsbild der gesamten Dunstabzugsvorrichtung verbessert.

Die Erfindung ist nicht auf die gezeigten Ausführungsformen beschränkt.

Auch die in den Figuren gezeigten und beschriebenen Winkelangaben und Abmessungen sind nicht beschränkend. So kann beispielsweise der Winkel des Abbugs des Übergangsbereichs der in Figur 4 gezeigten Ausführungsform einen anderen Wert besitzen. Vorteilhafter Weise ist der Winkel zwischen dem Prallbereich und dem Übergangsbereich aber größer als 90°.

### Bezugszeichenliste

- 1: Dunstabzugsvorrichtung

- 11: Sichthaube
- 111: Absaugöffnung
- 112: Abschirmblech
- 12: Kamin

- 2: Filtereinheit
- 21: Wrasenleitblech
- 211: Prallbereich
- 212: Flansch
- 213: Übergangsbereich
- 214: Schlitz
- 215: Flansch
- 216: schräger Bereich
- 22: Filterelement
- 23: Randabsaugbereich
- 24: Randspalt

- FF: Fettfilter (Stand der Technik)
- P: Prallblech (Stand der Technik)
- H: Halteblech (Stand der Technik)
- s: vertikaler Spalt (Stand der Technik
- S: horizontaler Spalt (Stand der Technik)

## Patentansprüche

1. Filtereinheit mit einem Filterelement (22) für eine Dunstabzugsvorrichtung (1), wobei die Filtereinheit (2) ein Wrasenleitblech (21), das das Filterelement (22) zumindest teilweise hält und das einen Prallbereich (211) aufweist, sowie einen den Prallbereich (211) des Wrasenleitblechs (21) zumindest teilweise umgebenden Randabsaugbereich (23) aufweist, wobei der Prallbereich (211) der Filtereinheit luftundurchlässig ist, der Randabsaugbereich (23) den einzigen Bereich darstellt, über den Wrasen und Dünste in die Dunstabzugsvorrichtung gelangen können, der Randabsaugbereich (23) zumindest teilweise durch einen Teil (216) des Wrasenleitbleches (21) gebildet wird, und der Randabsaugbereich (23) zu dem Prallbereich (211) abgewinkelt ist, **dadurch gekennzeichnet, dass** zwischen dem Prallbereich (211) des Wrasenleitblechs (21) und dem Randabsaugbereich (23) ein Übergangsbereich (213) vorgesehen ist, der entgegengesetzt zu der Ausrichtung des Randabsaugbereiches (23) ausgerichtet ist.

2. Filtereinheit nach Anspruch 1, **dadurch gekennzeichnet, dass** der Randabsaugbereich (23) zumindest teilweise durch einen Teil des Filterelementes (22) gebildet wird.

3. Filtereinheit nach Anspruch 2, **dadurch gekennzeichnet, dass** das Filterelement (22) zumindest im Bereich des Randabsaugungsbereiches (23) zumindest teilweise eine Beschichtung aufweist.

4. Filtereinheit nach Anspruch 3, **dadurch gekennzeichnet, dass** die Beschichtung an der Unterseite des Filterelementes (22) vorgesehen ist.

5. Filtereinheit nach einem der Ansprüche 1 bis 4, **dadurch gekennzeichnet, dass** in dem Randabsaugbereich (23) Öffnungen (214) in dem Wrasenleitblech (21) vorgesehen sind.

6. Filtereinheit nach einem der Ansprüche 1 bis 5, **dadurch gekennzeichnet, dass** der Randabsaugbereich (23) gegenüber dem Prallbereich (211) nach oben versetzt ist.

7. Filtereinheit nach Anspruch 1 bis 6, **dadurch gekennzeichnet, dass** der Übergangsbereich (213) zumindest teilweise Öffnungen (214) aufweist.

8. Filtereinheit nach Anspruch 7, **dadurch gekennzeichnet, dass** die die Öffnungen (214) sich von dem Übergangsbereich (213) bis in den Randabsaugbereich (23) erstrecken.

9. Filtereinheit nach einem der Ansprüche 1 bis 8, **dadurch gekennzeichnet, dass** der Übergangsbereich (213) um einen Winkel (α) von mehr als 90° zu der Ebene des Prallbereiches (211) von diesem nach oben abgewinkelt ist.

10. Filtereinheit nach einem der Ansprüche 1 bis 9, **dadurch gekennzeichnet, dass** die Filtereinheit eine vormontierbare Einheit darstellt.

11. Dunstabzugsvorrichtung zum Ansaugen und Reinigen von Dünsten und Wrasen, **dadurch gekennzeichnet, dass** diese eine Filtereinheit (2) nach einem der Ansprüche 1 bis 10 aufweist.

12. Dunstabzugsvorrichtung nach Anspruch 12, **dadurch gekennzeichnet, dass** die Filtereinheit als Baueinheit an einem Gehäuse der Dunstabzugsvorrichtung montierbar und demontierbar ist.

## Claims

1. Filter unit with a filter element (22) for a vapour removal apparatus (1), wherein the filter unit (2) has a vapour guiding sheet (21) that at least partially holds the filter element (22) and that has a baffle section (211), and having an edge suction section (23) that at least partially surrounds the baffle section (211) of the guiding sheet (21), wherein the baffle section (211) of the filter unit is air-impermeable, the edge suction section (23) represents the only section through which steam and vapours can enter the vapour removal apparatus, the edge suction section (23) is formed at least partially by a section (216) of the guiding sheet (21), and the edge suction section (23) is angled towards the baffle section (211), **characterised in that** a transition region (213) is provided between the baffle section (211) of the guiding sheet (21) and the edge suction section (23), said transition region being aligned in the opposite direction to the direction of the edge suction section (23).

2. Filter unit according to claim 1, **characterised in that** the edge suction section (23) is formed at least partially by a section of the filter element (22).

3. Filter unit according to claim 2, **characterised in that** the filter element (22) at least partially has a coating at least in the vicinity of the edge suction section (23).

4. Filter unit according to claim 3, **characterised in that** the coating is provided on the underside of the filter element (22).

5. Filter unit according to one of claims 1 to 4, **characterised in that** openings (214) in the guiding sheet (21) are provided in the edge suction section (23).

6. Filter unit according to one of claims 1 to 5, **characterised in that** the edge suction section (23) is oriented upwards relative to the baffle section (211).

7. Filter unit according to claim 1 to 6, **characterised in that** the transition region (213) at least partially has openings (214).

8. Filter unit according to claim 7, **characterised in that** the openings (214) extend from the transition region (213) into the edge suction section (23).

9. Filter unit according to one of claims 1 to 8, **characterised in that** the transition region (213) is angled upwards by an angle (α) of more than 90° from the level of the baffle section (211).

10. Filter unit according to one of claims 1 to 9, **characterised in that** the filter unit represents a preassemblable unit.

11. Vapour removal apparatus for removing and cleaning vapours and steam, **characterised in that** said vapour removal apparatus has a filter unit (2) according to claims 1 to 10.

12. Vapour removal apparatus according to claim 12, **characterised in that** the filter unit can be assembled and disassembled as a module on a housing of the vapour removal apparatus.

## Revendications

1. Unité de filtration avec un élément de filtration (22) pour un dispositif d'aspiration de vapeurs (1), dans laquelle l'unité de filtration (2) présente un déflecteur de buées (21) qui maintient au moins partiellement l'élément de filtration (22) et qui présente une zone d'impact (211), ainsi qu'une zone d'aspiration périphérique (23) qui entoure au moins partiellement la zone d'impact (211) du déflecteur de buées (21), dans laquelle la zone d'impact (211) de l'unité de filtration est imperméable à l'air, la zone d'aspiration périphérique (23) constitue l'unique zone via laquelle les buées et vapeurs peuvent arriver dans le dispositif d'aspiration des vapeurs, la zone d'aspiration périphérique (23) est au moins partiellement constituée par une partie (216) du déflecteur de buées (21), et la zone d'aspiration périphérique (23) décrit un angle par rapport à la zone d'impact (211), **caractérisée en ce qu'**une zone de transition (213) est prévue entre la zone d'impact (211) du déflecteur de buées (21) et la zone d'aspiration périphérique (23), laquelle est dirigée à l'opposé par rapport à la zone d'aspiration périphérique (23).

2. Unité de filtration selon la revendication 1, **caractérisée en ce que** la zone d'aspiration périphérique (23) est au moins partiellement constituée par une partie de l'élément de filtration (22).

3. Unité de filtration selon la revendication 2, **caractérisée en ce que** l'élément de filtration (22) présente au moins dans la zone de la zone d'aspiration périphérique (23) au moins partiellement un revêtement.

4. Unité de filtration selon la revendication 3, **caractérisée en ce que** le revêtement est prévu sur le côté inférieur de l'élément de filtration (22).

5. Unité de filtration selon l'une des revendications 1 à 4, **caractérisée en ce que** des orifices (214) sont prévus dans le déflecteur de buées (21) dans la zone d'aspiration périphérique (23).

6. Unité de filtration selon l'une des revendications 1 à 5, **caractérisée en ce que** la zone d'aspiration périphérique (23) est déplacée vers le haut par rapport à la zone d'impact (211).

7. Unité de filtration selon la revendication 1 à 6, **caractérisée en ce que** la zone de transition (213) présente au moins en partie des orifices (214).

8. Unité de filtration selon la revendication 7, **caractérisée en ce que** les orifices (214) s'étendent de la zone de transition (213) à la zone d'aspiration périphérique (23).

9. Unité de filtration selon l'une des revendications 1 à 8, **caractérisée en ce que** la zone de transition (213) décrit un angle (α) supérieur à 90° vers le haut par rapport au plan de la zone d'impact (211).

10. Unité de filtration selon l'une des revendications 1 à 9, **caractérisée en ce que** l'unité de filtration constitue une unité susceptible d'être montée au préalable.

11. Dispositif d'aspiration de vapeurs pour aspirer et nettoyer les buées et vapeurs, **caractérisé en ce qu'**il comprend une unité de filtration (2) selon l'une des revendications 1 à 10.

12. Dispositif d'aspiration de vapeurs selon la revendication 12, **caractérisé en ce que** l'unité de filtration est montable et démontable sur un bâti du dispositif d'aspiration de vapeurs sous forme d'élément.
